# EUROPEAN PATENT APPLICATION

(11) **EP 2 818 529 A1**
(43) Date of publication of application: **31.12.2014**
(21) Application number: 14171371.9
(22) Date of filing: 05.06.2014
(51) Int. Cl.: C09K 3/22

(54) **Dust-suppressing composition and method there for**

(30) Priority: 27.06.2013 NL 2011049
(71) Applicant: Van der Galiën, Harmke, 9285 WT Buitenpost (NL); Van der Galiën, Mark, 9285 WT Buitenpost (NL)
(72) Inventor: Van der Galiën, Mark, 9285 WT Buitenpost (NL)
(74) Representative: Verdijck, Gerardus

(57) **Abstract**

The present invention relates to a composition and method for suppressing dust formation. The composition for suppressing dust formation comprises a foam-forming anionic surfactant, dialkanolamide and alkyl D-glucoside. With the composition according to the present invention a prolonged dust-suppressing effect is achieved. In addition, the composition according to the invention is fully biodegradable and not harmful to people or the environment.

## Description

The present invention relates to a dust-suppressing composition. Dust-suppression can be relevant in a wide range of areas including wood dust when handling wooden material, demolition work and in the sorting of building and demolition waste. Dust is here understood to mean the particle-like material which is released during the work, taken up in the air and spread.

Released dust particles can be harmful to the persons directly involved in the work. The released dust, and in particular the small particles such as quartz dust, are breathed in and enter the lungs, which can result in serious bronchial disorders. Adverse effects on health, such as silicosis, can for instance occur as a result of prolonged exposure to quartz. According to present working conditions legislation, the exposure to dust must therefore be limited as much as possible.

In order to prevent dust formation it is known inter alia to spray the relevant material with water. Although this is an environmentally-friendly solution, it provides only a temporary solution. As soon as the water has evaporated, the dust-suppressing effect disappears. Large quantities of water are moreover required, and the water itself can result in damp problems.

It is also known to add one or more additives to the water, such as for instance means which lower the surface tension of the water, so that during spraying smaller droplets are formed and the sprayed surface area becomes larger. An additive on the basis of citrus fruits is for instance known.

Due to present-day environmental and working conditions legislation becoming increasingly strict, there is however a continuous demand for improved dust-suppressing compositions and methods.

WO 2006/068467 describes dust-suppressing compositions with an anionic surfactant and an amphoteric surfactant prolonging the suppressing effect to some extent.

Problems with conventional dust-suppression still include the limited time period wherein the suppression of dust is actively achieved.

The object of the present invention is to provide an effective dust-suppressing composition wherein the above stated drawbacks are obviated or reduced.

This object is achieved with the invention by a composition comprising a foam-forming anionic surfactant, a dialkanolamide and an alkyl D-glucoside.

The active ingredients of the dust binding composition according to the invention attract dust, bind it and dissolve it in foam. After the foam has disappeared the dust remains in an aqueous/moist substance and can be removed/disposed. With the composition according to the present invention much more dust can be bound with less water. In particular, the use of an alkyl D-glucoside contributes to achieving foam that is significantly more stable as compared to conventional dust-suppressing compositions. In addition, the use of an alkyl D-glucoside ensures that a prolonged dust-suppressing effect is achieved. In fact, the dust-suppressing effect is prolonged from days for conventional compositions to weeks, possibly even months, with the composition according to the present invention. In addition, the composition according to the invention is fully biodegradable and not harmful to people or the environment. Preservatives are furthermore unnecessary.

It is shown that the composition according to the invention does not produce toxic or dangerous gases. In addition, there remains no toxic residue when burning the composition.

In a preferred embodiment of the invention an alkene sulphonate is chosen as foam-forming anionic surfactant. Alpha olefin sulfonate (AOS) surfactants enhance the foaming capacity of the composition. The alpha alkene sulfonate can be an aliphatic (i.e. a linear alkyl), or an aromatic. The alpha alkene sulfonate can be unsubstituted or substituted, advantageously the substitution is an (linear) alkyl, a cycloalkyl, an aryl, which can be itself substituted or unsubstituted. The alkyl can be any C₁-C₂₀ alkyl, such as methyl, ethyl, propyl (such as i-propyl, n-propyl), butyl (such as t-butyl, i-butyl, n-butyl), pentyl (or any isomers), hexyl (or any isomers), heptyl (or any isomers), octyl (or any isomers), nonyl (or any isomers), decyl (or any isomers), undecyl (or any isomers), dodecyl (or any isomers), tetradecyl (or any isomers), hexadecyl (or any isomers). The cycloalkyl can be any C₆-C₁₀ cycloalkyl, such as cyclohexyl, cyclooctyl, cyclodecyl. The aryl can be any C₆-C₂₀ aromatic ring, such as a phenyl, a naphtyl. An alkene is a hydrocarbon with at least one unsaturated double bond carbon-carbon (C=C). An alkene can also be designated as an olefin. In the context of the present invention, the term "at least one" is to be understood as one, two, three, four, five, six. Advantageously, the foam-forming surfactant comprises a sulfonate (SO₃⁻). In the context of the present invention, the a double bond of the alpha olefin is at the primary or alpha (α) position. There are two types of alpha-olefins, branched (comprising one or more substitutions) and linear (or normal). The chemical properties of branched alpha-olefins with a branch at either the second (vinylidene) or the third carbon number are significantly different from the properties of linear alpha-olefins and those with branches on the fourth carbon number and further from the start of the chain. Preferably, the surfactant comprises C₁₄-C₁₆ alkene (olefin) sulphonate. Particularly suitable is for instance Hansanol OS46 (Hansa Chemie AG, Duisburg, Germany).

In anembodiment of the present invention, the foam-forming anionic surfactant comprises an alkali metal or an alkaline earth metal salt such as a sodium salt, a potassium salt, a lithium salt, or a calcium, a magnesium salt. The salt can be comprise a complex metallic ion or a metallic ion with an oxidation state of +I (alkali metals) or +II (alkaline earth metals). Preferably, the foam-forming surfactant comprises a sodium salt. More preferably, the surfactant comprises both sodium salt and alpha olefin sulfonate. It was shown that an amount of 0.5-60% by weight, preferably 10-25% by weight, on the basis of the active compound, provides good results for dust binding.

In a preferred embodiment of the foam-forming anionic surfactant further comprises an alkyl ether sulphate. The alkyl ether sulphate can be a alkali metal (or an alkaline earth metal) alkyl ether sulphate, such as sodium lauryl ether sulfate (SLES), which is an anionic detergent and surfactant further contributing to the foaming capacity of the composition according to the invention. Preferably, the alkyl ether sulphate is present in the composition an amount of 0.5-40% by weight, preferably 2.5-10% by weight of the total weight of the composition. The alkali metal can be chosen from the group consisting of Li⁺, Na⁺, K⁺. The alkaline earth metal can be chosen from the group consisting of Ca²⁺, Mg²⁺. The alkyl ether sulphate can be any C₆-C₂₀ alkyl ether sulphate which can advantageously be chosen from the group consisting of C₁₀ alkyl ether sulphate, C₁₂ alkyl (also designated as lauryl) ether sulphate, C₁₄ alkyl ether sulphate, C₁₆ alkyl ether sulphate.

Particularly good foaming results are achieved with a composition according to the invention comprising alpha-olefine sulphonate, a sodium salt and -sodium lauryl ether sulphate.

In a further advantageous embodiment according to the invention to enhance the foaming capability of the composition the dialkanolamide (also designated as di(hydroxyalkyl)amide) is an amide (C=O)-NH- comprising two hydroxyalkyl groups, i.e. two alcanol groups. The dihydroxyalkyl can be two same hydroxylalkyl groups or different groups chosen from any C₁-C₂₀, preferably C₁-C₁₂, more preferably C₁-C₆, most preferably C₂ alkyl. Advantageously, the amide comprises two hydroxyalkyl groups which are different or identical and which can be chosen from the group hydroxymethyl, hydroxyethyl, hydroxypropyl, hydroxybutyl, hydroxypentyl, hydroxyhexyl. Preferably, the dialkanolamide comprises a substitution on the amide group chosen from the group consisting of an alkyl, a cycloalkyl or an aryl which can be themselves substituted or unsubstituted. The alkyl can be any C₁-C₂₀ alkyl, such as methyl, ethyl, propyl (such as i-propyl, n-propyl), butyl (such as t-butyl, i-butyl, n-butyl), pentyl (or any isomers), hexyl (or any isomers), heptyl (or any isomers), octyl (or any isomers), nonyl (or any isomers), decyl (or any isomers), undecyl (or any isomers), dodecyl (or any isomers), tetradecyl (or any isomers), hexadecyl (or any isomers). The cycloalkyl can be any C₆-C₁₀ cycloalkyl, such as cyclohexyl, cyclooctyl, cyclodecyl. The aryl can be any C₆-C₂₀ aromatic ring, such as a phenyl, a naphtyl. More advantageously, the dialkanolamide is a diethanolamide. Most advantageously, the diethanolamide is a lauryl diethanolamide. Preferably, the quantity of dialkanolamide, amounts to 0.5-50% by weight and more preferably the quantity amounts to 2.5-10% by weight.

In a further advantageous embodiment according to the invention to significantly prolong the dust-suppressing effect the quantity of alkyl D-glucoside amounts to 0.05-5% by weight, more preferably the quantity amounts to 1-2.5% by weight of the composition. The alkyl D-glucoside can be any alkyl. Preferably, the alkyl is chosen from the group consisting of C₁-C₂₀ alkyl, more preferably C₆-C₁₆, even more preferably C₈-C₁₂ (such as octyl D-glucoside, nonyl D-glucoside, decyl D-glucoside, undecyl D-glucoside, dodecyl D-glucoside), most preferably, the alkyl D-glucoside is decyl D-glucoside.

The composition according to the invention can take diverse forms. In a preferred embodiment of the invention the composition is in the form of a concentrate which must be diluted with a diluent or dissolved in a solvent. Water can be advantageously used before using of the composition as a dust-formation suppressing composition. In a preferred embodiment of the invention 1 litre of concentrate is used to 100 litres of water. The composition can further be provided in already diluted form or in solid form.

The invention further relates to a method for suppressing dust formation, comprising of providing the dust-compressing composition according to one of the aforementioned embodiments.

Such a method provides the same effects and advantages as described in respect of the composition.

With the composition according to the present invention over 50 litres of foam can be obtained with one litre of water comprising about 1% of the composition (concentrate) according to the invention. The foam can then be arranged on the material before processing, after which an operation takes place, for instance sieving, reducing wood in size, reducing iron in size, breaking rubble, paper processing etc. During processing the dust is absorbed by the composition according to the invention, whereby sieving and sorting can take place without dust. The composition can also be applied during processing.

It will be understood that the dust-suppressing composition according to the invention can be used for any other material and application where dust formation forms a problem for people and/or the environment. The material can herein be brought into contact with the composition in diverse ways such as are known to the skilled person.

The composition according to the invention is tested in an experiment. The composition was applied to wood, with the composition including decyl-D-glucoside. The wood was exposed to ambient conditions including periods of sun and rain. After rain the wood was wet, soft and loose, after a sunny period the wood was dry and firm/hardened. There was no dust when rearranging or tossing up the wood. The test ran for about 4 months. The test showed that dust was binded for months.

The present invention is by no means limited to the above described preferred embodiments thereof. The rights sought are defined by the following claims, within the scope of which many modifications are possible.

## Claims

1. Composition for suppressing dust formation, comprising a foam-forming anionic surfactant, a dialkanolamide and an alkyl D-glucoside.

2. Composition as claimed in clause 1, wherein the anionic surfactant comprises an alpha olefin sulfonate.

3. Composition as claimed in clause 2, wherein the alpha olefin sulfonate is a C14-C16 alkene (olefin) sulphonate.

4. Composition as claimed in one or more of the foregoing clauses, wherein the anionic surfactant comprises sodium salt.

5. Composition as claimed in one or more of the foregoing clauses, wherein the quantity of anionic surfactants amounts to 0,5-60% by weight.

6. Composition as claimed in clause 5, wherein the quantity amounts to 10-25% by weight.

7. Composition as claimed in one or more of the foregoing clauses, wherein the composition comprises alkyl ether sulphate.

8. Composition as claimed in one or more of the foregoing clauses, wherein the alkyl ether sulphate comprises sodium lauryl ether sulphate.

9. Composition as claimed in one or more of the foregoing clauses, wherein the quantity of alkyl ether sulphate amounts to 0,5-40% by weight.

10. Composition as claimed in clause 5, wherein the quantity amounts to 2.5-10% by weight.

11. Composition as claimed in any of the foregoing clauses, wherein the dialkanolamide is a diethanolamide, wherein preferably the diethanolamide is a lauryl diethanolamide.

12. Composition as claimed in any of the foregoing clauses, wherein the quantity of dialkanolamide amounts to 0.5-50% by weight, preferably the quantity amounts to 2.5-10% by weight.

13. Composition as claimed in any of the foregoing clauses, wherein the quantity of alkyl D-glucoside amounts to 0.05-5% by weight, more preferably the quantity amounts to 1-2.5% by weight.

14. Composition as claimed in any of the foregoing clauses, wherein the alkyl D-glucoside is decyl D-glucoside.

15. Method for suppressing dust formation, comprising of bringing a dust-producing material into contact with a composition as claimed in any of the clauses 1-14.
